# EUROPEAN PATENT APPLICATION

(11) **EP 4 835 688 A1**
(43) Date of publication of application: **04.11.2026**
(21) Application number: 25305612.1
(22) Date of filing: 29.04.2025
(51) Int. Cl.: G06F 16/532, G06F 16/538, G06F 16/9032

(54) **FORENSIC PROCEDURE USING A LARGE LANGUAGE MODEL AND FACE PART SKETCHES**

(71) Applicant: THALES DIS FRANCE SAS, 92190 Meudon (FR)
(72) Inventor: DANG, Thi Tra Giang, 140051 Singapore (SG); ZEAMARI, Ali, 13013 Marseille (FR); LIANTO, Januar, 544819 Singapore (SG)
(74) Representative: Quintero Romero, Manuel

(57) **Abstract**

The invention provides a method of orchestrating a forensic procedure on a witness, the method comprising:
- processing (220; 221) a response in natural language of the witness by a Large Language Model, LLM, the response comprising information about a face part of a suspect, to determine a description of the face part;
- sending (223) a query comprising the determined description of the face part;
- obtaining (225) face part sketch candidates matching the description comprising in the query, each face part sketch candidate being a sketch of a face part identified by the face part identifier;
- determining a selection (228; 229), by the witness, of one of the face part sketch candidates;
- obtaining (234) a face sketch or a realistic face image of the suspect generated (233) based at least on the selected face part sketch.

## Description

### TECHNICAL FIELD

This invention is related to the field of methods and systems for orchestrating forensic procedures.

The invention is useful in particular in the context of a forensic procedure administered by an officer, during which a witness is asked about information describing facial features of a suspect.

### BACKGROUND OF THE INVENTION

During such forensic procedure, face sketch or realistic face image can be derived from the information provided by the witness, or by several witnesses.

According to some existing techniques, an artist may be involved in the procedure to draw a face sketch of the suspect described by the witness, in real time. However, such a solution is costly, time consuming and unstable as highly dependent on the artist's skill and style.

According to alternative solutions, an officer sequentially selects face part sketch options, for every face part that has been previously described by a witness, to build a composite obtained by assembling the selected face part options.

The composite can be shown to the witness for validation. However, this solution does not enable dynamic interactions for selecting the relevant face parts and relies on the interpretation made by the officer of the description given by the witness.

It is to be noted that witnesses usually only remember up to 4 or 5 facial features (face parts) of the suspect, so that the officer may lack information for selecting relevant face parts that are not remembered by the witness.

Another solution is based on generative Artificial Intelligence tools, to generate hyper-realistic face sketches during forensic procedures. This solution has the advantage of being fast but is criticized, because it gives biases to the witness, which strongly influences the result of the forensic procedure. Indeed, once a witness sees a face image, it may replace in their mind, their hazy memory of the actual suspect. This is even more true for an AI-generated image that is very realistic, compared to a hand-drawn sketch.

It is therefore necessary to avoid showing a face composite to the witness too early in the forensic procedure. In addition, if a face composite is shown to the witness, it is preferable to rely on sketches rather than realistic images.

There is therefore a need for a method and device for orchestrating a forensic procedure, that allow obtaining a face sketch or a face realistic image of a suspect, while being fast, without being too dependent on the officer's interpretation of the description given by the witness, and without giving bias information to the witness.

### SUMMARY OF THE INVENTION

The present invention provides a solution for all the aforementioned problems by a method of orchestrating a forensic procedure on a witness according to claim 1, a computer program according to claim 10, a device according to claim 11, and a system according to claim 12. In dependent claims, preferred embodiments of the invention are defined.

A first aspect of the invention concerns a method of orchestrating a forensic procedure on a witness, the method comprising the following steps:
- processing at least one response in natural language of the witness by a Large Language Model, LLM, the at least one response comprising information about a face part of a suspect, to determine a description of the face part associated with a face part identifier identifying the face part;
- sending a query to a face part sketch database, the query comprising the determined description of the face part in association with the face part identifier;
- obtaining, from the face part sketch database, face part sketch candidates matching the description comprised in the query, each face part sketch candidate being a sketch of the face part identified by the face part identifier;
- determining a selection, by the witness, of one of the face part sketch candidates as a selected face part sketch;
- obtaining at least one face sketch and/or at least one realistic face image of the suspect generated based at least on the selected face part sketch.

Therefore, the method relies on the use of an LLM for processing the responses of the witness, and for automatically retrieving face part sketch candidates that are stored in advance in a face part sketch database, therefore replacing, compared to traditional forensic procedure, an interview handled by an officer using cognitive interview techniques. The witness also validates a face part sketch (at least one), among several face part sketch candidates, which avoids showing a complete face to the witness too early in the forensic procedure. This enables a fast and automatic method for obtaining the at least one face sketch or at least one realistic face image, while reducing the influence on the memory of the witness, compared to the solutions of the prior art. It also enables the witness to freely describe the suspect in natural language because an LLM is used to interpret the responses given by the witness.

According to some embodiments, the at least one response in natural language of the witness may be provided by the witness interacting with a witness Graphical User Interface, GUI, displayed on a first display device, and the obtained at least one face sketch or the at least one realistic face image may be displayed on an officer GUI displayed on a second display device.

Therefore, separate information can be displayed to the witness and to an officer administering the forensic procedure, using a double display system. Enriched information can be provided to the officer, without biasing the witness during the forensic procedure.

According to some embodiments, the method may further comprise sending a match request to a face search device associated with a mugshot database, the match request comprising the at least one face sketch or the at least one realistic face image generated based at least on the selected face part sketch, and receiving, in response to the match request, mugshot candidates matching the at least one face sketch or the at least one realistic face image. Each mugshot candidate may comprise an identity of a person, a face mugshot of the person and a matching score between the face mugshot of the person and the at least one face sketch or the at least one realistic face image.

Therefore, the at least one face sketch and/or at least one realistic image obtained based on the interview with the witness, is used to automatically retrieve mugshot candidates.

In complement, the method may further comprise displaying the mugshot candidates on the officer GUI.

This enables to give enriched information to the officer, without biasing the witness. The officer may also ask complementary questions to the witness based on the mugshot candidates, which enables him to conduct a dynamic and efficient forensic procedure.

According to some embodiments, the steps of processing at least one response in natural language of the witness, of sending the query to the face part sketch database, of obtaining face part sketch candidates and of determining the selection of one of the face part sketch candidates, may be iterated for different face part identifiers to obtain a set of selected face part sketches. The obtained at least one face sketch and/or the obtained at least one face realistic image may be generated based on the set of selected face part sketches.

This enables to obtain a set of selected face part sketches, for different face parts that are selected separately by the witness. This enables to generate a whole face sketch or realistic face image (or several face sketches or several realistic face images, for several face modes, as explained in what follows) of the suspect, without biasing the witness. In addition, for the face parts for which description is given by the witness (because the witness cannot remember these face parts for example), neutral face part sketches may be added to the set, which increases the accuracy of the obtained face sketch or realistic face image.

In complement, the method may further comprise a first interview phase with the witness, during which the LLM determines initial descriptions for several face parts associated with several face part identifiers and with confidence levels.

The steps of processing at least one response in natural language of the witness, of sending the query to the face part sketch database, of obtaining face part sketch candidates and of determining the selection of one of the face part sketch candidates, may be iterated for different face part identifiers during a second interview phase. The order of the iterations may be defined by the confidence levels associated with the face part identifiers and the initial descriptions.

Therefore, the first interview phase enables the witness to freely describe the crime or infraction scene, and the second interview phase may be determined based on the results of the first interview phase. The efficiency associated with the generation of the at least one face sketch and/or the at least one realistic image is improved, as the second interview phase may prioritize the face parts of the suspect for which the confidence levels are the highest.

According to some embodiments, the method may further comprise displaying the obtained at least one face sketch generated based at least one the selected face part sketch as a temporary face sketch on the witness GUI for validation. Upon validation of the at least one temporary face sketch by the user, the temporary face sketch may be stored as at least one final face sketch.

This enables the witness to validate the at least one face sketch before it is used by the officer. Because validation is based on at least one face sketch, and not a realistic image, the influence of the image on the memory of the witness is reduced. The witness can therefore check that the at least one face sketch is consistent with the responses that had been provided to the LLM.

In complement, upon reception of a modification request in natural language by the witness after displaying the temporary face sketch, the method may further comprise determining a modification instruction by the LLM based on the modification request in natural language, and transmitting a request to modify the at least one temporary face sketch and/or to modify at least one corresponding temporary realistic face image, the request comprising the modification instruction determined by the LLM.

Therefore, in addition to selecting face part candidates based on which at least one temporary face sketch is generated, the witness can modify the temporary face sketch before it is stored as final face sketch. The accuracy of the at least one final face sketch is improved, while reducing the biases on the witness, because only sketches are shown to the witness (no realistic image).

According to some embodiments, the method may further comprise receiving context information from an officer GUI and may further comprise fine tuning of the LLM based on the context information, before processing the at least one response in natural language of the witness.

This increases the relevance of the questions that are asked to the witness by the LLM and the analysis of the responses by the LLM.

A second aspect of the invention concerns a computer program comprising instructions arranged for implementing the method according to the first aspect of the invention, when said instructions are executed by a processor.

A third aspect of the invention concerns a device for orchestrating a forensic procedure on a witness comprising a processor configured for:
- processing at least one response in natural language of the witness using a Large Language Model, LLM, the at least one response comprising information about a face part of a suspect, to determine a description of the face part associated with a face part identifier identifying the face part;
- sending a query to a face part sketch database, the query comprising the determined description of the face part in association with the face part identifier;
- obtaining, from the face part sketch database, face part sketch candidates matching the description comprised in the query, each face part sketch candidate being a sketch of the face part identified by the face part identifier;
- determining a selection, by the witness, of one of the face part sketch candidates as a selected face part sketch;
- obtaining at least one face sketch and/or at least one realistic face image of the suspect generated based at least on the selected face part sketch.

A fourth aspect of the invention concerns a system for orchestrating a forensic procedure on a witness comprising a device according to the third aspect of the invention, and further comprising :
- a first display device configured for displaying a witness GUI configured for receiving responses from the witness;
- the face part sketch database storing associations of face part sketches, face part identifiers and reference face part descriptions;
- a face composite generation device configured for generating the at least one face sketch or the at least one realistic face image based at least on the selected face part sketch;
- a second display device configured for displaying an officer GUI configured for displaying the obtained at least one face sketch and/or the at least one realistic face image of the suspect.

According to some embodiments, the system may further comprise a face search device configured for, upon reception of a match request from the device, the match request comprising the at least one obtained face sketch and/or the at least one realistic face image of the suspect, retrieving mugshot candidates from a mugshot database, wherein each mugshot candidate comprises an identity of a person, a face mugshot of the person and a matching score between the face mugshot of the person and the at least one face sketch or the at least one realistic face image.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
[Fig. 1] shows a system for orchestrating, or implementing, a forensic procedure administered by an officer on a witness, according to some embodiments of the invention;
[Fig. 2] illustrates the steps of a method according to some embodiments of the invention;
[Fig. 3] illustrates the structure of a device in a system for orchestrating a forensic procedure, according to some embodiments of the invention.

### DETAILED DESCRIPTION OF THE INVENTION

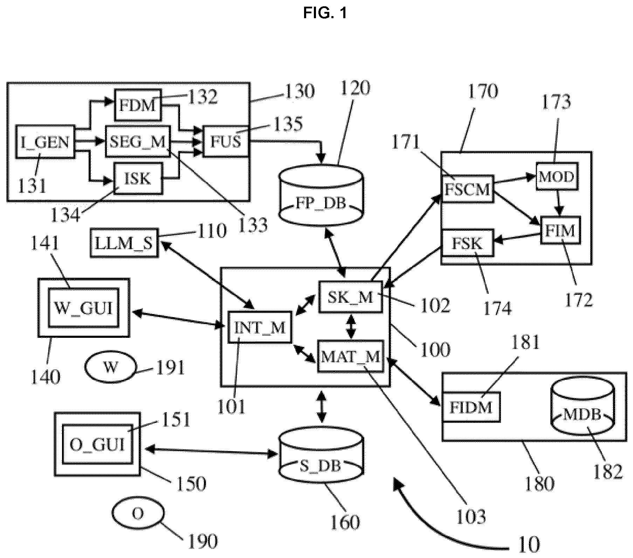

Figure 1 shows a system 10 for implementing a forensic procedure being administered by an officer 190 and involving a witness 191.

The goal of the forensic procedure is to output at least one face sketch and/or at least one face realistic image of a suspect, to be shown to the officer 190, to be compared with other face sketches or face realistic images produced by similar forensic procedures with other witnesses, and/or to be compared with mugshots of a mugshot database 182, as described in what follows.

No restriction is attached to the context of the forensic procedure, which aims at identifying a suspect of a crime scene or an infraction scene, based on information provided by one or several witnesses.

In the present description, the term "realistic" designates an image that comprises more details (colours and texture in particular) compared to a sketch, which only comprises outlines, in black and white or with grey levels.

The system 10 comprises a device 100, or forensic procedure orchestrating device, comprising the following modules:
- an interviewing module 101, configured for interacting with the witness 191, to "interview" the witness to obtain information representative of face features (face parts) of a suspect and to validate face part sketch candidates, as explained in what follows. The interviewing module 101 is configured to interact with the witness 191 using natural language: to this end, the interviewing module 101 can execute at least one first Large Language Model, LLM, which can be executed in the device 100, or which can be executed on an external LLM module 110. An LLM is a type of machine leaning model designed for natural language processing task. It can be self-trained on a vast amount of text provided as training data. For example, the at least one first LLM may be a generative pretrained transformer, which is an artificial neuronal network. In addition, the at least one LLM can be fine-tuned based on context information provided by an officer, as described in what follows. No restriction is attached to the technology associated with the at least one LLM, which can be based on ChatGPT^{™} 3 or 4, Gemini^{™} or Llama^{™}, for example, or on a customized LLM fine-tuned for the purposes of the interviewing module 101. Based on the information communicated by the witness 191 in natural language, the interviewing module 101 is configured to generate face part descriptions of several face parts of the suspect, as explained in what follows. To interact with the witness 191, the interviewing module 101 can control a first Graphical User Interface, GUI, 141 on a first display device 140. The first display device 140 may be a screen of a computer. The first display device 140 may for example be a touchscreen. The witness 191 can interact with the first GUI 141 by inputting text in natural language using a keyboard (or using typing on the screen directly when the screen is a touchscreen) or using a microphone associated with a speech-to-text module (not shown on figure 1), to answer questions that are displayed by the interviewing module 101 on the first GUI 141, and to select face part sketch candidates, as explained in what follows. According to some embodiments, an officer (described in what follows) can interact with the GUI 141, in particular with the at least one first LLM, on behalf of the witness;

- a face sketching module 102, configured to communicate with a face part sketch database 120, storing face part sketches in association with respective reference face part descriptions and respective face part identifiers. The face sketching module 102 is configured to send a query indicating a face part identifier and a face part description to the face part sketch database 120, the face part identifier and the face part description being received from the interviewing module 101 and being derived from the information provided by the witness 191 as a text in natural language. To this end, according to some embodiments, the face sketching module 102 may implement at least one second LLM. Based on the query, the face part sketch database 120 is configured to retrieve several face part sketch candidates (the ones for which the respective reference face part descriptions match which the face part description of the query) that are returned to the face sketching module 102, to be submitted for selection to the witness 191 via the first GUI 141, as explained in what follows. In addition, the face sketching module 102 is configured for communicating with a face composite generation device 170, that is configured for generating (or composing) at least one face sketch and/or at least one realistic face image based on a set of face part sketches provided by the face sketching module 102, and optionally based on at least one face mode indicated by the face sketching module 102, after selection of the face part sketches by the witness 191 as explained in what follows;
- a matching module 103, which is optional according to the invention, which is configured to communicate with a face search device 180 comprising a mugshot database 182. The matching module 103 can send a match request comprising at least one face sketch or at least one face realistic image (obtained from the face composite generation device 170 via the face sketching module 102), and the face search device 180 comprises a face identification module 181 that is arranged to retrieve mugshot candidates from the mugshot database 182, based on matching scores between the mugshots of the mugshot database 182 and the face sketch or face realistic image of the match request. The one or several mugshot candidates, comprising their respective identities, face mugshots and matching scores, are returned to the matching module 103, to be displayed on a second GUI 151 of a second display device 150 of the officer 190 administering the forensic procedure, as explained in what follows. The matching module 103 may also implement at least one third LLM according to some embodiments of the invention. The match request may also comprise additional information obtained during the first phase or the second phase of the interview as described in what follows, such as demographic information related to the suspect for example.

Alternatively, the modules 101, 102 and 103 can be implemented in several devices, and not in a single device 100 as shown on figure 1. For example, the interviewing module 101 can be implemented in a first device, the face sketching module 102 can be implemented in a second device and the matching module 103 can be implemented in a third device.

As explained above, the face part sketch database 120 stores face part sketches is association with respective reference face part descriptions and with respective face part identifiers.

The face part identifier identifies the face part to which the face part sketch corresponds. Therefore, there may be a face part identifier "nose", a face part identifier "eye", a face part identifier "face shape", and so on. No restriction is attached to the number of different face part identifiers for which the face part sketch database 120 stores face part sketches. However, the number of face part identifiers is preferably higher than a given threshold (for example at least 3 or 4) to maintain a good coverage of face part's characteristics.

Therefore, for a given face part identifier, the face part sketch database 120 may store several face part sketches corresponding to different reference face part descriptions.

For example, for the face part identifier "nose", the face part sketch database 120 may store:
- a first face part sketch corresponding to a first reference face part description such as "long and thin nose"; and
- a second face part sketch corresponding to the second reference face part description such as "long and large nose"; and
- a third face part sketch corresponding to the third reference face part description "small and large nose", etc.

In practice, the reference face part description may be more detailed than the examples listed above, and for every face part identifier, the face part sketch database 120 may store much more than 3 face part sketches, for example more than 10 face part sketches, or more than 100 face part sketches.

The face part sketches described above are listed for illustrative purposes only. No restriction is attached to the number of entries of the face part sketch database 120, nor to the number of entries per face part identifier. Also, no restriction is attached to the way the face part sketches and their corresponding reference face part descriptions are obtained.

For example, according to some embodiments, the face part sketch database 120 may be fed by a face part sketch generating system 130 comprising:
- a face image generating module 131, arranged for generating face images, that are realistic (including colours and texture information). For example, the face image generating module 131 may implement an artificial intelligence generative model trained by machine learning. For example, the generative model implemented by the face image generating module 131 may be a Generative Adversarial Network, GAN, configured to generate realistic face images based on random samples. According to other embodiments, the generative model implemented by the face image generating module 131 may be a diffusion model. The principles of generative models such as GANs and diffusion models are well known and are not further described. Alternatively, the face image generating module 131 can be replaced by a realistic face image database, which can store realistic face images that are photographs for example;
- a face description generating module 132, configured for receiving the face images generated by the face image generating module 131 as inputs, and to output respective face descriptions. The face description generating module 132 may implement an LLM that is configured to receive face images as inputs and to output face descriptions as texts or as numerical values. No restriction is attached to the format of the face descriptions output by the LLM, which can be as follows, for example "Nose: big nose; eyes: medium side and almond shaped; etc". Alternatively to an LLM, the face description generating module 132 may be a handcrafted algorithm configured to receive a realistic face image as input and to output face descriptions as texts or as numerical values (for example a size or width of the nose expressed as a value), for example as a series of keywords or values several face part identifiers;
- a face segmentation module 133 configured for receiving a realistic face image from the face image generation module 131, and to output segments of the realistic face image, each segment identifying a part (a set of pixels) of the realistic face image for each of face parts. Therefore, segments can be identified for the following face parts for example: "hair", "face outline", "eyebrow", "eyes", "nose" and "mouth". The segmentation implemented by the face segmentation module 133 is consistent with the face part identifiers stored in the face part sketch database 120 (there is one segment for every face part identifier). No restriction is attached to the face segmentation model implemented by the face segmentation module 133, which may be obtained by machine learning or may be a handcrafted algorithm;

- a first image to sketch transformation module 134, configured for receiving a realistic face image and for generating a corresponding face sketch, based on an image to sketch transformation model, which can be obtained by machine learning, or which can be a handcrafted algorithm. For example, the image to sketch transformation model can be trained by supervised learning, based on training data comprising pairs, each pair comprising a realistic face image and a corresponding face sketch as label; and
- a face part sketch generation module 135 described in what follows.

As shown on figure 1, realistic face images generated by the face image generating module 131 are sequentially transmitted, in parallel to the face description generation module 132, to the face segmentation module 133 and to the first image to sketch transformation module 134.

The face part sketch generation module 135 is configured to receive the outputs of the face description generation module 132, to the face segmentation module 133 and to the first image to sketch transformation module 134, for every generated realistic face image submitted by the face image generation module 131 to these modules. Therefore, the face part sketch generation module 135 is configured to receive a face sketch, corresponding segments representing face parts and a corresponding face description. The face part sketch generation module 135 is configured to split the face sketch in face part sketches, based on the segments, and, for every segment (corresponding to a face part), to identify a face part description in the face description. Therefore, the face part sketch generation module 135 produces several outputs, one output for every face part: each output comprises a face part sketch and an associated face part description (which is the reference face part description stored in the face part sketch database 120 described above).

For example, the face part sketch generation module 135 obtains a face part sketch representing a nose (after splitting the face sketch in segments), and associates to it the face part description "big nose" extracted from the face description "Nose: big nose; eyes: medium side and almond shaped; etc" given above as example.

Assuming that N realistic face images are generated by the face image generation module 131 and submitted as inputs to the modules 132, 133 and 134, and assuming that each face description describes k face parts (and that the realistic face image is segmented in k segments), the face part sketch generating system 130 produces k*N associations between a face part sketch and a corresponding face part description, which can be stored in the face part sketch database 120 as face part sketches and corresponding reference face part descriptions.

Alternatively to the embodiments involving the face part sketch generating system 130, the face part sketch database 120 may be fed by face part sketches and reference face part descriptions that are manually created, for example by one or several artists.

As explained in what follows, based on the face part descriptions extracted from the information provided by the witness 191 in natural language, face part sketch candidates can be extracted from the face part sketch database 120, and provided for selection to the witness 191, by the device 100, via the witness GUI 141.

The device 100 can therefore obtain a set of selected face part sketches, corresponding to different face parts of the suspect. The set of selected face part sketches can be submitted to the face composite generation device 170 by the sketching module 102 of the device 100.

As mentioned above, the face composite generation device 170 is configured to generate at least one face sketch and/or at least one face realistic image based on a set of selected face part sketches provided by the face sketching module 102. In addition, at least one modification instruction may be transmitted by the face sketching module 102, to be applied to the at least one face sketch and/or to the at least one realistic face image obtained based on the set of selected face part sketches. No restriction is attached to the modification instruction, which can be any instruction to modify a face image or sketch, such as "make the nose bigger", or "make the eyebrows thinner", for example. Therefore, more generally, the face composite generation device 170 is configured to output a realistic face image and/or a face sketch, based on a set of face part sketches, and optionally based on at least one modification instruction. The modification instruction may indicate a local feature adjustment or a global (or holistic) adjustment, to be made to the at least one face sketch and/or at least one realistic face image.

To this end, the face composite generation device 170 may comprise:
- a face sketch creation module 171, that is configured for generating, or creating, at least one face sketch, based on a set of face part sketches. The face sketch creation module 171 can put together the face part sketches of the set to build at least one composite forming at least one whole face sketch. No restriction is attached to the model implemented by the face sketch creation module 171, which may be trained by machine learning or which can be a handcrafted algorithm;
- a sketch to image transformation module 172 configured to generate at least one realistic face image based on the at least one face sketch created by the face sketch creation module 171. The sketch to image transformation module 172 can implement a sketch to image transformation model, which can be obtained by machine learning, or which can be a handcrafted algorithm. For example, the sketch to image transformation model can be trained by supervised learning, based on training data comprising pairs, each pair comprising a realistic face image and a corresponding face sketch as label (which can be the same training data as the training data used to train the image to sketch transformation model implemented by the first image to sketch transformation module 134 described above);
- a face image manipulation module 173, that is configured to modify a realistic face image generated by the sketch to image transformation module 172, based on at least one modification instruction received by the face composite generation device 170 from the face sketching module 102. The face image manipulation module 173 can implement an image manipulation model, such as one of the following known models for example: a known diffusion model such as LEDITS++, a conditional GAN such as 3D-FM-GAN, or other known techniques. Alternatively, the image manipulation model can be a handcrafted algorithm;
- a second image to sketch generation module 174, configured to receive a realistic face image and to generate a corresponding face sketch, based on an image to sketch transformation model, which can be obtained by machine learning, or which can be a handcrafted algorithm.

The image to sketch transformation model implemented by the second image to sketch generation module 174 can be the same as the one implemented by the first image to sketch generation module 134 described above.

It is to be noted that the modules 171 to 174 may additionally receive at least one face mode, or face modality, as input, and may generate a face sketch and/or a realistic face image for every face mode. The at least one face mode may be received with the set of selected face part sketches provided by the face sketching module 102. Faces modes may encompass different emotions, different lighting conditions, different accessories conditions, different angles of view, different ages, etc.

More generally, the face composite generation device 170 is configured:
- for receiving a request comprising a set of selected face part sketches, and optionally at least one modification instruction and/or at least one face mode, from the sketching module 102;
- for returning, to the sketching module 102;

The at least one face sketch generated by the face sketch creation module 171 based on the set of selected face part sketches, for every face mode indicated in the request; and/or the at least one realistic face image generated by the sketch to image transformation module 172, based on the face sketch generated by the face sketch creation module 171, for every face mode indicated in the request; and/or
the at least one modified realistic face image obtained by the face image manipulation module 173 based on the realistic face image generated by the sketch to image transformation module 172, for every face mode indicated in the request; and/or
the at least one modified face sketch obtained by the second image to sketch transformation module 174 based on the modified realistic face image obtained by the image transformation module 172, for every face mode indicated in the request.

Therefore, the face sketching module 102 receives at least one realistic face image and/or at least one face sketch (modified or not), corresponding to a composite of the face sketches of the set submitted in the request, and optionally to the at least one face mode indicated in the request.

Alternatively, a first request comprising the set of face part sketches can be first received by the face composite generation device 170, from the sketching module 102. The at least one face sketch generated by the face sketch creation module 171 and/or the at least one realistic face image generated by the sketch to image transformation module 172 can be transmitted to the face sketching module 102, in response to the first request.

This allows to show the at least one face sketch obtained from the first request to the witness 191 on the witness GUI 141, and/or to show the at least one face sketch and/or the realistic face image to the officer 190 on the officer GUI 151. The officer 190 and/or the witness 191 can then request modification of the at least one face sketch and/or of the at least one realistic face image, using the officer GUI 151 and/or the witness GUI 141, by providing natural language modification descriptions, and based on the natural language modification descriptions, the interviewing module 101 determines at least one modification instruction to be transmitted by the sketching module 102 to the face composite generation device 170 in a second request.

The second request comprising at least one modification instruction can be received by the face composite generation device 170, which can then return, in response to the second request, at least one modified realistic face image determined by the face image manipulation module 173 and/or the at least one modified face sketch obtained by the second image to sketch transformation module 174.

The system 10 may further comprise a face search device 180 that is configured to communicate with the optional matching module 103 of the device 100. The face search device 180 comprises:
- a face search module 181; and
- a mugshot database 182, as previously described.

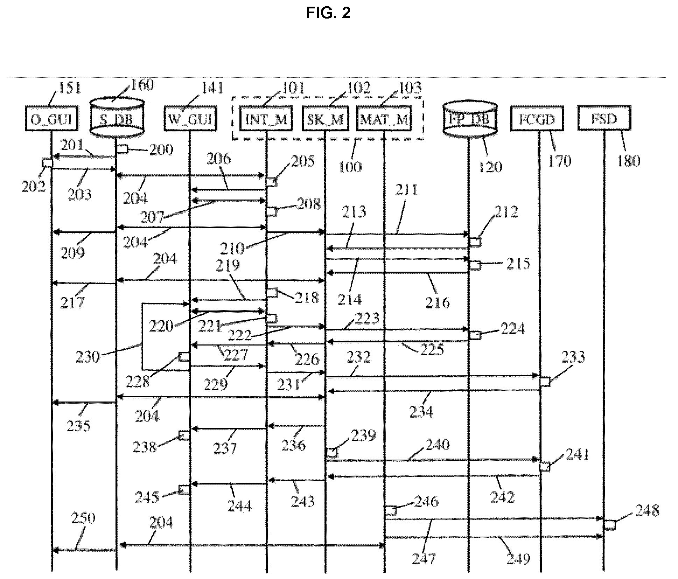

The face search module 181 is configured to receive a match request from the matching module 103, the match request comprising at least one face sketch and/or at least one realistic face image (optionally several face sketches and realistic face images for different face modes), previously received from the face composite generation device 170, and, according to some embodiments, after validation of the face sketch by the witness 191 and/or by the officer 190, or after validation of the face realistic image by the officer 190, as detailed when referring to figure 2.

Based on the at least one face sketch and/or at least one realistic face image in the match request, the face search module 181 is configured to interrogate the mugshot database 182, to retrieve mugshot candidates matching the at least one face sketch and/or the at least one realistic face image of the match request. The mugshot candidates can be associated with respective scores, depending on the level of match between each mugshot candidate with the face sketch and/or the realistic face image of the match request. No restriction is attached to the at least one criterion used by the face search module 181 to evaluate the matching score between each mugshot candidate and the at least one face sketch and/or the at least one realistic face image of the match request. Criteria to determine matching scores between two images, in particular between two face images, are well known and are not further described in the present description. According to some embodiments, the face search module 181 retrieves the M mugshot candidates having the highest matching scores among the mugshot candidates of the mugshot database 182, M being an integer equal to or greater than 1. For example, M can be comprised between 3 and 6, therefore returning only relevant mugshot candidates to the officer 190, while avoiding rejecting a potential mugshot candidate being the suspect described by the witness 191.

The face search module 181 is configured to return the obtained mugshot candidates to the matching module 103, in response to the match request. The matching module 103 can add the mugshot candidates to a session database 160 described below, to display the mugshot candidates on the officer GUI 151.

The session database 160 can be maintained synchronized with the device 100. The session database 160 can receive context information from the officer 190, input via the officer GUI 191. As explained in what follows, the context information may be information describing the context of the crime scene or infraction scene for which the forensic procedure is implemented. For example, the context information may identify a type of crime or infraction, a place of the crime or infraction, and so on. In addition, the context information may comprise demographic information related to the suspect, such as age, gender and/or ethnicity for example. The context information can be transmitted to the device 100, which can fine tune the LLM implemented by the interviewing module 101 based on the context information. In return, the session database 160 can receive the information that is collected by the device 100 from the other components of the system 10, such as:
- the questions and answers between the witness 191 and the interviewing module 101; and/or
- the at least one realistic face image and/or the at least one face sketch received from the face composite generation device, which can be updated in real time based on the interview of the witness, as explained in what follows; and/or
- the mugshot candidates obtained from the face search device 180; and/or
- other information, such as face sketches and/or realistic images obtained from other witnesses.

**Figure 2** is a flowchart describing the steps of a method according to some embodiments of the invention.

The steps are carried out by the devices and modules of the system 10 described when referring to figure 1.

At step 200, the officer 191 initiates a session on the session database 160, via the officer GUI 151.

At step 201, a session identifier corresponding to the initiated session can be created by the session database 160.

At step 202, the officer 191 provides context information to the officer GUI 151, as previously explained, which may comprise demographic information as explained above. The context information is stored in association with the session identifier in the session database 160 at a step 203.

At step 204, the session database 160 and the device 100 are synchronized. The synchronization of step 204 is maintained during the subsequent steps of the method so that the device 100 and the session database 160 are frequently synchronized during the forensic procedure. At the beginning of step 204, the context information initially stored in the session database 160 is transmitted to the device 100, in particular to the interviewing module 101. The LLM implemented by the interviewing module 101 can be enriched or fine-tuned based on the context information provided by the officer 190, at step 205.

At step 206, the interviewing module 101 controls the witness GUI 141 to initiate a first interview phase, during which the witness is invited to freely describe, using natural language and via the witness GUI 141, the crime or infraction scene, and the suspect.

The witness 191 therefore interacts with interviewing module 101 via the witness GUI 141 at step 207 during the first interview phase. The first interview phase may comprise several interactions, each interaction comprising the display of a question (in natural language) on the witness GUI 141 and the receiving of a response by the witness 191, in natural language. The analysis of the answers of the witness 191 and the generation of the responses is performed by the LLM implemented by the interviewing module 101, as previously described.

An example of dialogue between the witness 191 and the interviewing module 101 during the first interview phase is given for illustrative purposes hereafter:
- Interviewing module 101: "Could you please describe the event in as much detail as you can?"
- Witness 191: "Someone harassed me";
- Interviewing module 101 : "Thank you for sharing that. Let us focus on the suspect now. Could you please describe his face in as much detail as you can? Do not worry if you cannot recall everything right away, we will go through different steps to help jog your memory later";
- Witness 191: "his face shape is quite average and quite rounded. And his nose looks normal as well";
- Interviewing module 101: "You have mentioned his face shape is quite average and rounded, and his nose looks normal. Could you try to recall any other features of his face, like his eyebrows, eyes, mouth or hair? Even small details can be helpful. Could you try to recall and describe any other features of his face?";
- Witness 191: "his eyebrows are rather thick and flat as well";
- Interviewing module 101: "Thank you. Here is a summary so far: Face shape : Quite average and rounded; Nose: looks normal; Eyebrows: Rather thick and flat. Could you recall and describe any other features, like his eyes, mouth or hair".
- Witness 191: "No, I don't".

The first interview phase therefore enables the witness to freely describe the crime or infraction scene and the suspect, and to acquire initial information about some face parts of the witness. The witness 191 is also asked one or several times about face parts of the witness for which no information has been provided in the initial free description.

Based on the information provided by the witness 191 during the first interview phase, the interviewing module 101 is configured to identify, at step 208 an initial description for at least one face part of the suspect, and to optionally determine a level of confidence for every initial description of a face part that has been identified. The level of confidence can be determined by the LLM implemented by the interviewing module 101.

During the first interview phase of step 207, the session database 160 can be fed with the dialogue between the witness 191 and the interviewing module 101, because they are maintained synchronized at step 204 as previously described. The dialogue can therefore be displayed on the officer GUI 151 at step 209, because the second display device 150 accesses the session database 160, so that the officer 190 accesses the information provided by the witness 191, in real time.

No face sketch or realistic face image is shown to the witness 191 during the first interview phase, which enables to avoid giving bias information.

At optional step 210, the initial description for the at least one face part of the suspect, is transmitted from the interviewing module 101 to the face sketching module 102. The face sketching module 102 sends an initial query to the face part sketch database 120, at step 211, the query comprising at least one association between an initial description and a face part identifier (identifying the face part that is described by the initial description).

In the example described above, the witness 191 provides initial information related to the face shape, the nose and the eyebrows of the suspect. Therefore, in that example, the initial query comprises three associations between a face part identifier and a corresponding initial description.

According to some embodiments, an initial description and the corresponding face part identifier are included in the initial query only if the confidence level is higher than a predefined confidence threshold.

Upon reception of the initial query, the face part sketch database 120, retrieves, at step 212, for every initial description associated with a face part identifier in the query, at least one face part sketch, for which the reference face part description matches the initial description of the query (or for which a matching score with the initial description is among the highest, or is higher than a predefined threshold).

According to some embodiments, at step 212, the face part sketch database 120 further retrieves a neutral face part sketch for every face part that is not described by an initial description in the initial query (in the example given above, it includes the eyes, the mouth, the hair). According to some embodiments, the initial query further comprises the context information initially provided by the agent, in particular the demographic information of the suspect. The neutral face part sketch (or sketches) can correspond to the demographic information of the suspect comprised in the initial query, which enhances the accuracy of the retrieved neutral face part sketches.

At step 213, the face part sketch database 120 returns to the face sketching module 102, in response to the initial query, an initial set of face part sketches, comprising face part sketches matching the initial descriptions and comprising, if any, neutral face part sketches for the face parts that have not been described during the first interview phase.

At step 214, the face sketching module 102 transmits an initial request comprising the initial set of face part sketches, to the face composite generation device 170.

At step 215, the face composite generation device 170 generates an initial face sketch and/or an initial realistic face image, based on the initial set of face part sketches, as explained above.

At step 216, the face composite generation device 170 returns to the face sketching module 102, in response to the initial request, the initial face sketch and/or an initial realistic face image.

Because the session database 160 is maintained synchronized with the device 100, the initial face sketch and/or the initial realistic face image is added to the session database 160 during synchronization step 204. At step 217, the initial face sketch and/or the initial realistic face image can be displayed on the officer GUI 151, so that the officer 190 can observe it. For example, the officer 190 can compare it with other face sketches or realistic face images obtained from similar forensic procedures with other witnesses.

It is to be noted that the initial face sketch or initial realistic face image is not displayed on the witness GUI 151, to avoid giving bias information to the witness 191 before the subsequent interview phase.

As indicated above, steps 210 to 217 are optional and may not be performed according to the invention. Also, as explained hereafter, the first interview phase and the second interview phase may be grouped in a single interview phase, that aims at providing face part sketch candidates for selection to the witness 191, to build a set of selected face sketches, as explained in what follows.

At step 218, the interviewing module 101 initiates a second interview phase. The second interview phase can be triggered by a start command from the officer 190 on the officer GUI 151. The start command may comprise additional context information from the officer, that can be provided to the LLM implemented by the interviewing module 101.

At step 219, the interviewing module 101 controls the witness GUI 141 to start the second interview phase, the second interview phase being conducted, at step 220, by the first LLM implemented by the interviewing module 101.

To conduct the second interview phase with the witness 191, the first LLM takes into account:
- the dialogue of the first interview phase;
- the context information initially provided by the officer 190 at step 202;
- optionally the additional context information, included in the start command of the officer 190, transmitted at step 218.

According to the invention, the second interview phase may comprise several iterations, each iteration comprising a series of questions dedicated to a single face part. The order in which the different face parts are discussed with the witness 191 can be based on the confidence levels determined at step 208. For example, the second interview phase may start with the face part for which the confidence level has been determined as the highest during the first interview phase.

For every iteration, the second interview phase comprises a series of questions to obtain detailed information about a face part of the suspect.

In the example given above, the first iteration of the second interview phase may be associated with a first face part identifier, which is the face shape of the suspect, for example because it has the highest confidence level during the first interview phase.

An example of dialogue between the interviewing module 101 and the witness 191 is given for illustrative purposes, during a first iteration of the second interview phase, dedicated to the face shape:
- interviewing module 101: "Based on your previous descriptions, we will now refine specific features of the suspect's face, starting with the face shape. Could you tell more about the rounded and average face shape you mentioned earlier? For example, was it more wide or narrow, or did it have distinct contours?";
- witness 191: "it was more wide than narrow";
- interviewing module 101: "Could you also tell me if the face seemed short or long. Or if it had any specific contours, like being more oval, square or heart-shaped?";
- witness 191: "Sorry, I am not sure";
- interviewing module 101: "according to your description, the suspect's face shape is quite average, rounded, and more wide than narrow".

Based on this dialogue, the interviewing module 111 determines, at step 221, a description of the face part corresponding to the iteration (the face shape in the example above), the description being more precise than the initial description, because the iteration of the second interview phase is dedicated to improve the level of precision of the description for a given face part of the suspect.

Based on the description of the face part determined at step 221, the interviewing module 101 transmits the description of the face part and the first face part identifier to the sketching module 102, at step 222.

At step 223, the sketching module 102 transmits a query to the face part sketch database 120 comprising the description and the first face part identifier. The query may further comprise the demographic information related to the suspect.

At step 224, the face part sketch database 120 retrieves several face part sketch candidates, for which the reference face part descriptions match the description of the query (for example, for which matching scores are the highest, or for which the matching scores are above a predefined threshold), and the demographic information. No restriction is attached to the number of face part sketch candidates, which can be comprised between 2 and 6 for example, preferably comprised between 3 and 5.

At step 225, the face part sketch database 120 transmits the retrieved face part sketch candidates to the face sketching module 102, in response to the query.

At step 226, the face sketching module 102 transmits the face part sketch candidates for the first face part identifier, to the interviewing module 101.

At step 227, the interviewing module 101 controls the witness GUI 141 to proceed further with the second interview phase, by proposing for selection the face part sketch candidates to the witness 191.

At step 228, the witness 191 selects one of the face part sketch candidates, as a selected face part sketch for the first face part identifier (in the example of first iteration given above, the witness 191 selects one of the face part sketch candidates representing face shapes) on the witness GUI 141.

The selected face part sketch for the first face part identifier is transmitted by the witness GUI 141 to the interviewing module 101, at step 229.

Steps 220 to 230 together form the second interview phase. As indicated above, the second interview phase can be carried out for several iterations, so the method can go back to step 220 after selecting a new (second) face part identifier at step 230. For example, after selection by the witness of a face shape, the second interview phase can be carried out for obtaining a description of the nose of the suspect (the nose being then the second face part identifier).

Also, after step 229, the selected face part sketch for the current iteration is used to update a set of selected face part sketches, stored by the face sketching module 102, at step 231. Before the first iteration of the second interview phase, the set of selected face part sketches comprises neutral face part sketches for all the face part identifiers, preferably neutral face part sketches matching the demographic information initially provided by the officer. Therefore, after the first iteration, the neutral face part sketch of the first face part identifier is replaced with the selected face part sketch corresponding to the first face part identifier.

Alternatively, before the first iteration, the set of selected face part sketches is empty, so that a selected face part sketch is simply added to the set after each iteration.

At step 232, the face sketching module 102 transmits a first request to the face composite generation device 170, the first request comprising the updated set of selected face part sketches. The first request may also comprise one or several face modes that are derived by the interviewing module 101 from the second interview phase.

At step 233, the face composite generation device 170 generates at least one face sketch and/or at least one realistic face image, based on the updated set of selected face part sketches, and optionally based on the at least one face mode.

At step 234, the face composite generation device 170 returns the at least one face sketch and/or the at least one realistic face image to the face sketching module 102, in response to the first request.

After step 235, because the session database 160 and the device 100 are maintained synchronized at step 234, the face sketch and/or the realistic face image received at step 234, can be displayed on the officer GUI 151.

Steps 232 to 235 can be performed after each update of the set of selected face sketches (therefore after each iteration of the second interview phase). This enables the officer 151 to observe the evolution of the at least one face sketch and/or at least one face realistic image after each selection of a face part sketch candidate by the witness 151. The officer 151 can therefore guide the witness 151 or can compare the at least one face sketch and/or the at least one face realistic image with the ones generated during other forensic procedures for other witnesses. In addition, as explained in what follows, mugshot candidates corresponding to the face sketch and/or face realistic image, can be updated after each iteration during the second interview phase.

Alternatively, steps 232 to 235 are performed only after all the iterations of the second interview phase are completed.

Still alternatively, steps 232 to 235 can be performed after each iteration of the second interview phase, from the N1^{th} iteration, N1 being an integer strictly greater than 1. This allows to display the at least one face sketch and/or the at least one face realistic image to the officer 190, only when it is based on several selections by the witness 191 (so when the display of the face sketch and/or face realistic image is more relevant). It therefore avoids displaying neutral faces to the officer 190, and/or interrogating the face search device 180 when it is not necessary.

After the second interview phase is completed (after selection of a given number of face part sketches by the witness 191, which depends on the number of face parts for which the witness remembers at least one detail), the last at least one face sketch and/or at least one the realistic face image retrieved from the face composite generation device 170 is stored as at least one temporary face sketch and/or at least one temporary realistic face image, by the face sketching module 102.

The at least one temporary face sketch is transmitted by the face sketching module 102 to the interviewing module 101, at step 236. At step 237, the interviewing module 101 controls the witness GUI 141 to display the at least one temporary face sketch to the witness 191, to request validation or modification of the at least one temporary face sketch.

At step 238, when the at least one temporary face sketch is displayed on the witness GUI 141, the witness 191 may validate the at least one temporary face sketch or may describe at least one modification to be applied the at least one temporary face sketch. The description of the at least one modification may be provided in natural language according to the invention.

In parallel, during steps that are not shown on figure 2, the officer 150 may also validate or request modification of the at least one temporary face sketch, or of the at least one temporary realistic face image, using the officer GUI 141 on which the temporary face sketch and/or the at least one temporary realistic face image is displayed.

If the at least one temporary face sketch is validated by the witness at step 238, and optionally if the at least one temporary face sketch and/or the at least one temporary realistic face image is validated by the officer, the method may go further with step 245 described in what follows.

Else, if the witness 191 describes at least one modification to be applied to the at least one temporary face sketch and/or if the officer 151 describes at least one modification to be applied to the at least one temporary face sketch and/or to the at least one temporary realistic face image, the method goes further with step 239.

At step 239, the face sketching module 102 obtains at least one modification instruction, based on the description of at least one modification provided by the witness 191 and/or by the officer 190. The modification instruction can be generated by the LLM implemented by the interviewing module 101 based on the description of the at least one modification in natural language, given by the witness 191.

At step 240, the face sketching module 102 transmits a second request to the face composite generation device 170, the second request comprising the at least one modification instruction.

Upon reception of the second request, the face composite generation device 170 generates, at step 241, at least one modified face sketch and/or at least one modified realistic face image, by modifying the last generated at least one realistic face image by the face image modification module 173 previously described.

Alternatively, the face sketching module 102 transmits a request comprising the last updated set of selected face part sketches (the most recent), optionally the at least one face mode, and the at least one modification instruction, at step 240, to the face composite generation device 170. Then, upon reception of the request, the face composition generation device 170 generates at least one modified face sketch and/or at least one modified realistic face image based on the last updated set of selected face part sketches and based on the at least one modification instruction.

At step 242, after generation of the at least one modified face sketch and/or of the at least one modified realistic face image, the face composite generation device 170 returns the at least one modified face sketch and/or the at least one modified realistic face image to the face sketching module 102.

At step 243, the face sketching module 102 transmits the at least one modified face sketch to the interviewing module 101.

At step 244, the interviewing module 101 controls the witness GUI 144 to display the at least one modified face sketch to the witness 191.

The at least one modified face sketch and/or the at least one modified realistic face image may also be displayed on the officer GUI 151, by transmitting it to the session database 160 (as explained previously, during the synchronization of step 204, which is performed all along the forensic procedure).

At step 245, the witness 191 validates the at least one modified face sketch and the at least one modified face sketch is stored as at least one final face sketch in the device 100.

Alternatively, the witness 191 provides a description of additional modifications to be made to the at least one modified face sketch, via the witness GUI 141, using natural language. Then, steps 239 to 244 can be repeated based on the additional modifications provided by the witness 191. The witness 191 can therefore iteratively modify the at least one face sketch, until validation of at least one modified face sketch that is stored as at least one final face sketch in the device 100.

According to some embodiments of the invention, after validation of the at least one final face sketch by the witness 191, the method may further comprise step 246, during which the matching module 103 prepares a match request comprising the at least one final face sketch and/or the at least one final realistic face image corresponding to the at least one final face sketch (previously received at step 242 from the face composite generation device 170).

The matching module 103 transmits the match request to the face search device 180 at step 247.

Upon reception of the match request, the face search device 180 retrieves mugshot candidates from the mugshot database 182, as previously explained, each mugshot candidate comprising an identity of a person, a face mugshot of the person and a matching score between the face mugshot and the at least one final face sketch and/or the at least one final realistic face image corresponding to the final face sketch.

The face search device 180 returns the mugshot candidates, in response to the match request, to the matching module 103, at step 249.

The mugshot candidates are transmitted to the session database 160, during the synchronization step 204, as previously described.

At step 250, the mugshot candidates can be displayed on the officer GUI 151.

In the embodiment of figure 2, steps 245 to 250 are performed once the at least one final face sketch has been validated by the witness 191. Alternatively, steps 245 to 250 can be performed after each iteration, or after some iterations, of the second interview phase (in particular after step 234, when at least one face sketch and/or at least one realistic face image is obtained from the face composite generation device 170 based on the last updated set of selected face part sketches). This enables to update the mugshot candidates in real time on the officer GUI 151, while the second interview phase is carried out with the witness 191.

The invention therefore enables to take advantage of the capacities of LLM to interact with a person in natural language, to conduct a forensic procedure. In addition, no realistic face image is shown to the witness, which ensures that no bias information influences the witness. Because the face part sketches are stored in advance in the face part sketch database, face part sketch candidates matching the description given by the witness in natural language can be obtained in a rapid manner, and, once validated by the user, can be used to generate a whole face sketch and/or a realistic face image.

The officer 190 can observe all the information of the session in real time on the officer GUI, including the dialogue with the witness, the at least one face sketch and/or at least one realistic face image during the second interview phase (which can be updated at every iteration), the mugshot candidates, other face sketches and/or realistic face images obtained from information of other witnesses. The officer is therefore able to influence the forensic procedure by asking relevant questions to the witness and/or by requesting modifications to be made to the face sketch or to the realistic face image obtained from the face composite generation device 170, in a dynamic manner, for example.

A dual screen system comprising the second display device 150 displaying the officer GUI 151 on one side and the first display device 140 displaying the witness GUI 141 on the other side, enables to avoid biasing the witness, while giving maximum relevant information to the officer.

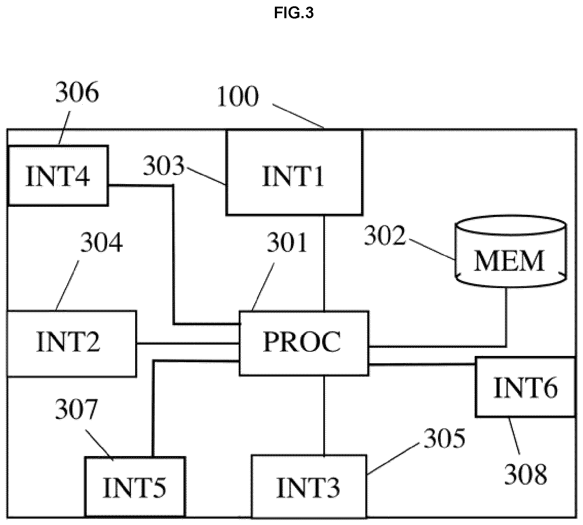

**Figure 3** shows the structure of the device 100 according to some embodiments of the invention.

The device 100 comprises a processor 301 and a memory 302.

The processor 301 may comprise one or multiple microprocessors, a Central Processing Unit (CPU), on a single Integrated Circuit (IC) or several IC chips.

No restriction is attached to the memory 302, which may be any non-transient, tangible form of memory. For example, it can comprise ROM, RAM, EEPROM and/or flash memory. The processor 301 may be programmable and may be configured to execute instructions that are stored in its internal memory or to execute instructions that are stored in the memory 302.

The processor 301 is configured to implement the modules 101 to 103 described above. To this end, the memory 302 can store instructions for implementing the steps 204 to 208, 210, 211, 213, 214, 216, 218 to 227, 229 to 232, 234, 236, 237, 239, 240, 242 to 244, 246, 247 and 249 described above

Alternatively, each of the modules 101 to 103 comprises its dedicated processor, for example:
- a first processor configured for implementing the interviewing module 101 and for performing the steps of the method involving the interviewing module 101;
- a second processor configured for implementing the face sketching module 102 and for performing the steps of the method involving the face sketching module 102;
- optionally, a third processor configured for implementing the matching module 103 and for performing the steps of the method involving the matching module 103.

The memory 302 may store the parameters of the LLM that is implemented by the interviewing module 101, as previously described, and optionally of the LLMs implemented in the face sketching module 102 and/or in the matching module 103.

The device 100 further comprises a first interface 303 configured to communicate with first display device 140 to control the witness GUI 141 and to receive the inputs of the witness 191 on the witness GUI 141.

The device 100 further comprises a second interface 304 configured to communicate with the session database 160. Alternatively, the session database 160 is included in the device 100. According to this alternative, the second interface 304 is configured to communicate with the second display device 150 to control the officer GUI 151 and to receive the inputs of the officer 190 on the officer GUI 151.

The device 100 further comprises a third interface 305 configured to communicate with the face part sketch database 120.

The device 100 further comprises a fourth interface 306 configured to communicate with the face composite generation device 170.

The device 100 may further comprise a fifth interface 307 configured to communicate with the face search device 180.

The device 100 may further comprise a sixth interface 308 configured to communicate with the external LLM module 110.

Alternatively, the device 100 stores the face part sketch database 120, or integrates the face composite generation device 170 and/or the face search device 180 (or only the face search module 181) and/or the external LLM module 110, as additional modules implemented by the processor 301 and the memory 302.

The embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method of orchestrating a forensic procedure on a witness (191), the method comprising the following steps:
- processing (220; 221) at least one response in natural language of the witness by a Large Language Model, LLM, the at least one response comprising information about a face part of a suspect, to determine a description of the face part associated with a face part identifier identifying the face part;
- sending (223) a query to a face part sketch database (120), the query comprising the determined description of the face part in association with the face part identifier;
- obtaining (225), from the face part sketch database, face part sketch candidates matching the description comprised in the query, each face part sketch candidate being a sketch of the face part identified by the face part identifier;
- determining a selection (228; 229), by the witness, of one of the face part sketch candidates as a selected face part sketch;
- obtaining (234) at least one face sketch and/or at least one realistic face image of the suspect generated (233) based at least on the selected face part sketch.

2. The method according to claim 1, wherein the at least one response in natural language of the witness (191) is provided by the witness interacting with a witness Graphical User Interface, GUI, (141) displayed on a first display device (140); and wherein the at least one obtained face sketch or at least one realistic face image is displayed on an officer GUI (151) displayed on a second display device (150).

3. The method according to claim 1 or 2, further comprising sending (247) a match request to a face search device (180) associated with a mugshot database (182), the match request comprising the at least one face sketch and/or the at least one realistic face image generated (233) based at least on the selected face part sketch, and receiving (249), in response to the match request, mugshot candidates matching the at least one face sketch and/or the at least one realistic face image, wherein each mugshot candidate comprises an identity of a person, a face mugshot of the person and a matching score between the face mugshot of the person and the at least one face sketch or the at least one realistic face image.

4. The method according to claims 2 and 3, further comprising displaying (250) the mugshot candidates on the officer GUI (151).

5. The method according to one of the preceding claims, wherein the steps of processing (220; 221) at least one response in natural language of the witness (191), of sending (223) the query to the face part sketch database (120), of obtaining (225) the face part sketch candidates and of determining (228; 229) the selection of one of the face part sketch candidates, are iterated (230) for different face part identifiers to obtain a set of selected face part sketches;
wherein the obtained face sketch and/or the obtained face realistic image is generated (233) based on the set of selected face part sketches.

6. The method according to claim 5, further comprising a first interview phase with the witness, during which the LLM determines (208) initial descriptions for several face parts associated with several face part identifiers and with confidence levels; wherein the steps of processing (220; 221) at least one response in natural language of the witness, of sending (223) the query to the face part sketch database (120), of obtaining (225) face part sketch candidates and of determining (228; 229) the selection of one of the face part sketch candidates, are iterated (230) for different face part identifiers during a second interview phase, wherein the order of the iterations is defined by the confidence levels associated with the face part identifiers and the initial descriptions.

7. The method according to the preceding claims, further comprising displaying (237) the obtained at least one face sketch generated (233) based at least on the selected face part sketch as a temporary face sketch on the witness GUI for validation; wherein, upon validation (238) of the at least one temporary face sketch by the user, the temporary face sketch is stored as at least one final face sketch.

8. The method according to claim 7, wherein, upon reception (238) of a modification request in natural language by the witness (191) after displaying (237) the at least one temporary face sketch, the method further comprises determining (239) a modification instruction by the LLM based on the modification request in natural language, and transmitting (240) a request to modify the at least one temporary face sketch and/or to modify at least one corresponding temporary realistic face image, the request comprising the modification instruction determined by the LLM.

9. The method according to one of the preceding claims, further comprising, receiving (203; 204) context information from an officer GUI, and further comprising fine tuning (205) the LLM based on the context information, before processing (220; 221) the at least one response in natural language of the witness.

10. A computer program comprising instructions arranged for implementing the method according to one of claims 1 to 9, when said instructions are executed by a processor (301).

11. A device (100) for orchestrating a forensic procedure on a witness (191) comprising a processor (301) configured for:
- processing at least one response in natural language of the witness using a Large Language Model, LLM, the at least one response comprising information about a face part of a suspect, to determine a description of the face part associated with a face part identifier identifying the face part;
- sending a query to a face part sketch database, the query comprising the determined description of the face part in association with the face part identifier;
- obtaining, from the face part sketch database (120), face part sketch candidates matching the description comprised in the query, each face part sketch candidate being a sketch of the face part identified by the face part identifier;
- determining a selection, by the witness, of one of the face part sketch candidates as a selected face part sketch;
- obtaining at least one face sketch and/or at least one realistic face image of the suspect generated based at least on the selected face part sketch.

12. A system (10) for orchestrating a forensic procedure on a witness (191) comprising a device (100) according to claim 11, and further comprising :
- a first display device (140) configured for displaying a witness GUI (141) configured for receiving responses from the witness;
- the face part sketch database (120) storing associations of face part sketches, face part identifiers and reference face part descriptions;
- a face composite generation device (170) configured for generating the at least one face sketch or the at least one realistic face image based at least on the selected face part sketch; and
- a second display device (150) configured for displaying an officer GUI (151) configured for displaying the obtained at least one face sketch and/or the at least one realistic face image of the suspect.

13. The system according to claim 12, further comprising a face search device (180) configured for, upon reception of a match request from the device, the match request comprising the obtained at least one face sketch and/or the at least one realistic face image of the suspect, retrieving mugshot candidates from a mugshot database (182), wherein each mugshot candidate comprises an identity of a person, a face mugshot of the person and a matching score between the face mugshot of the person and the at least one face sketch or the realistic face image.
